(19) Europäisches Patentamt / European Patent Office / Office européen des brevets

(11) **EP 3 581 486 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **19177820.8**

(22) Anmeldetag: **03.06.2019**

(51) Internationale Patentklassifikation (IPC):
**B64C 13/00** (2006.01)     **B64F 5/60** (2017.01)
**G01M 5/00** (2006.01)

(52) Gemeinsame Patentklassifikation (CPC):
**B64C 13/00; B64F 5/60; G01M 5/0016; G01M 5/0033**

(54) **VERFAHREN ZUR DETEKTION EINES BRUCHS IN EINEM  HOCHAUFTRIEBSSYSTEMS EINES FLUGGERÄTS**

METHOD FOR DETECTING A BREAK IN A HIGHLIFT SYSTEM OF AN AIRPLANE

PROCÉDÉ DE DÉTECTION D'UNE RUPTURE DANS UN SYSTÈME HYPERSUSTENTATEUR D'UN AÉRONEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2018   DE 102018114297**

(43) Veröffentlichungstag der Anmeldung:
**18.12.2019   Patentblatt 2019/51**

(73) Patentinhaber: **Liebherr-Aerospace Lindenberg GmbH**
**88161 Lindenberg/Allgäu (DE)**

(72) Erfinder:
• **Ladner, Raphael**
**88161 Lindenberg (DE)**

• **Kohlöffel, Christian**
**88279 Amtzell (DE)**
• **Schievelbusch, Bernd**
**88161 Lindenberg (DE)**

(74) Vertreter: **Herrmann, Uwe**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**DE-A1-102008 052 754     DE-A1-102009 053 126**
**DE-A1-102017 002 053     US-A- 5 719 566**
**US-A1- 2010 288 886**

EP 3 581 486 B1

**Beschreibung**

Die Erfindung betrifft ein Verfahren zur Detektion eines Bruchs (Disconnect) in einem Hochauftriebssystem eines Fluggeräts, insbesondere eines Flugzeugs, unter Berücksichtigung von Lastwerten im Bereich des Hochauftriebssystems entsprechend dem Oberbegriff des Anspruchs 1.

Gattungsgemäße Verfahren werden zur Überwachung von Hochauftriebssystemen mit einem zentralen Antriebssystem genutzt. Derartige Hochauftriebssysteme werden heute in allen gängigen Flugzeugen im Bereich Single Aisle und Long Range verwendet. Die zentrale Antriebseinheit des Hochauftriebssystems ist dabei mittels eines Drehwellensystems über die gesamte Spannweite des Flügels mit entsprechenden Antriebsstationen der einzelnen Segmente der Landeklappensysteme beziehungsweise der Vorflügelklappensysteme verbunden.

US 2010 / 288 886 A1 betrifft ein Flugzeughochauftriebssystem mit mindestens einer Ladestation zum Betätigen einer Flügelklappe, vorzugsweise einer Landeklappe und / oder einer Vorderkantenklappe, mindestens einer Übertragung mit Übertragungsabschnitten, die zwischen Zweigübertragungen angeordnet sind, wobei mittels der Abzweigübertragungen Betätigungsenergie von der Übertragung zur Ladestation abgezweigt werden kann, sowie ein Verfahren zum Bestimmen eines Betriebszustands eines Flugzeughochauftriebssystems.

Die Erfindung dient zur Detektion eines Bruchs in den Antriebsstationen, in der Kinematik und/oder in einem strukturseitigen Einzelsegment des Hochauftriebssystems. Im Falle eines solchen Bruchs muss der intakte Lastpfad von wenigstens zwei ursprünglich vorgesehenen Lastpfaden dieses Einzelsegments die komplette Luftlast alleine tragen. Dieser Fehlerfall muss üblicherweise innerhalb eines Fluges erkannt werden. Die Erfindung ermöglicht eine Detektion dieses Fehlerfalls auf Basis von Lastmessungen. Dabei wird der Anteil eines einzelnen Lastpfades an der Gesamtlast überwacht.

Gemäß dem Stand der Technik wird ein solcher Bruch der Antriebsstation, der Kinematik oder eines strukturseitigen Einzelsegment bei Flugzeugen über Positionsmessungen, Lastmessung in einem einzelnen Lastpfad und/oder durch zeitlich vorgeschriebene Prüfungen der mechanischen Komponenten detektiert.

Im Falle eines Bruchs und des daraus resultierenden fehlenden bzw. unterbrochenen zweiten oder weiteren Lastpfades, ergibt sich eine Schiefstellung der entsprechenden Klappe. Diese Schiefstellung wird durch Überschreiten einer definierten Differenz der Werte von Positionssensoren am Ausgang der Antriebseinheit beziehungsweise an der Kinematik detektiert.

Bei einer Bruchdetektion an einem von zwei Lastpfaden wird die Last an einer einzelnen Antriebsstation beziehungsweise der dazu gehörenden Kinematik gemessen. Im Falle eines Bruchs des Lastpfades mit Lastsensor unterschreitet die gemessene Last einen vordefinierten Wert. Im Falle eines Bruchs des Lastpfads ohne Lastsensor überschreitet die gemessene Last des intakten Lastpfades mit Lastsensor einen vordefinierten Wert.

Bei einer Bruchprüfung innerhalb von vorgeschriebenen Prüfintervallen wird eine visuelle oder methodengestützte Prüfung der mechanischen Komponenten durchgeführt um darin einen Bruch zu detektieren.

Nachteilig an diesen aus dem Stand der Technik bekannten Verfahren ist im Falle der Positionsmessung, dass dabei die erfasste Sensorinformation nicht mit anderen Funktionen wie beispielsweise der Lastlimitierung geteilt werden kann. Dadurch erhöht sich die Anzahl der Komponenten beziehungsweise Sensoren im Flugzeug. Bei der auf der Positionsmessung basierenden Bruchdetektion kann ferner ein auftretender Bruch erst bei einer entsprechend großen Klappenschiefstellung erkannt werden.

Durch hohe Toleranzen beziehungsweise Ungenauigkeiten im System kann ferner dabei der Monitor nicht robust ausgelegt werden und es kommt dadurch zur falschen Detektion von Brüchen und somit zu unnötigen Wartungsmaßnahmen. Im Falle der Positionsmessung muss eine sichere Detektion eines Bruchs erst durch mehrere Messungen beziehungsweise durch Vergleichen von In-Flight Messungen und On-Ground Messungen bestätigt werden.

Vor diesem Hintergrund ist es Aufgabe der Erfindung ein verbessertes Verfahren zur Detektion eines Bruchs in einem Hochauftriebssystems eines Fluggeräts bereitzustellen, welches insbesondere einfacher und sicherer funktioniert. Verfahrensgemäß können dabei Brüche in der Antriebsstation und Brüche der Struktur zwischen einem zentralen Antriebssystem und einer entsprechend verstellten Klappe beziehungsweise einer entsprechenden Kinematik detektiert werden. Ein solcher Bruch kann innerhalb eines Flugzyklus detektiert werden.

Diese Aufgabe wird erfindungsgemäß durch ein Verfahren mit den Merkmalen des Anspruchs 1 gelöst. Vorteilhafte Ausgestaltungen sind Gegenstand der Unteransprüche. Erfindungsgemäß umfasst das Verfahren die Schritte:

- Erfassen wenigstens zweier Lastwerte im Bereich des Hochauftriebssystems;

- Berechnen wenigstens eines Verhältnisses der wenigstens zwei Lastwerte;

- Vergleichen des Verhältnisses mit wenigstens einem Grenzwert; und

- Ausgeben einer Information in Abhängigkeit von dem Vergleich.

Durch einen weiter oben beschriebenen Bruch wird einer der Lastpfade zwischen Antriebssystem und Klappe unterbrochen. Dadurch wird die gesamte Luftlast der Klappe über den verbleibenden Lastpfad übertragen. Dieser Zustand wird durch die vorliegende Erfindung detektiert und es kann ausgehend von dem erfindungsgemäß durchgeführten Vergleich eine entsprechende Information beispielsweise an einen Bordcomputer des Fluggeräts und/oder an den Piloten ausgegeben werden.

Die Lastwerte können dabei über wenigstens einen entsprechenden Sensor pro Lastpfad erfasst werden. Dieser Sensor kann an einer ausgewählten Stelle entlang des Lastpfades angeordnet sein.

In einer bevorzugten Ausführung der Erfindung ist denkbar, dass zur Detektion eines Bruchs in einem Lastpfad einer Klappe die Lastwerte an dieser einzigen Klappe des Hochauftriebssystems gemessen werden. Alternativ oder zusätzlich ist denkbar, dass die Lastwerte an wenigstens zwei unterschiedlichen Klappen des Hochauftriebssystems gemessen werden. Die beiden Möglichkeiten können beispielsweise in unterschiedlichen Flugphasen oder Wartungsphasen des Fluggeräts bzw. zu unterschiedlichen Zeitpunkten angewandt werden und damit gegebenenfalls auch kombiniert eingesetzt werden.

In einer besonders bevorzugten Ausführung ist denkbar, dass die wenigstens zwei unterschiedlichen Klappen einander symmetrisch gegenüberliegende Klappen und/oder beliebige Klappen eines linken und eines rechten Flügels des Fluggeräts sind, und/oder dass die wenigstens zwei unterschiedlichen Klappen eine Inboardklappe und eine Outboardklappe eines einzelnen Flügels des Fluggeräts sind. Dementsprechend ist auch eine Ausführung umfasst, in welcher mehr als zwei symmetrisch oder anders zueinander angeordnete Klappen auf Brüche ihrer Aufhängungen beziehungsweise auf Brüche sonstiger Komponenten untersucht werden.

Erfindungsgemäß wird das Verhältnis (R) gemäß wenigstens einer der Gleichungen

$$R = |L1| / (|L1|+|L2|);$$

$$R = (|L1|-|L2|) / (|L1|+|L2|);$$

$$R = L1 / L2;$$

$$R = |L1\_r| / (|L1\_l|+|L2\_l|);$$

und/oder

$$R = (|L1\_r| + |L2\_r|) / (|L1\_l|+|L2\_l|)$$

berechnet. Die Lastwerte L1_r, L1_l, L2_r und L2_l beziehen sich dabei auf erste und zweite Lastwerte in dem rechten (r) beziehungsweise linken (l) Flügel.

Damit kann entweder eine einzelne der genannten Gleichungen oder eine Kombination der Gleichungen beispielsweise in Abhängigkeit von der Flugsituation, vom Betriebszustand des Flugzeugs und/oder vom Zeitpunkt zum Berechnen wenigstens eines Verhältnisses (R) genutzt werden. Dementsprechend können gegebenenfalls auch unterschiedlich berechnete Verhältnisse (R) genutzt werden.

In einer weiteren bevorzugten Ausführung ist denkbar, dass das Verhältnis (R) im Flug, bei großen Klappenwinkeln, bei stationären Klappenpositionen, bei Airbrakes und/oder kurz nach dem Ausfahren der Klappen berechnet wird, insbesondere ausschließlich in einer der genannten Situationen berechnet wird. Die Angabe, dass das Verhältnis (R) berechnet wird, kann auch das Erfassen der zu dieser Berechnung erforderlichen Lastwerte und/oder wenigstens einen weiteren Schritte des Verfahrens umfassen. Die Angabe, dass dies kurz nach dem Ausfahren der Klappen erfolgt, kann sich auf einen Zeitraum von einigen Sekunden bis einigen Minuten nach dem Ausfahren der Klappen beziehen.

Vorzugsweise ist das Verfahren ausgeführt, dass das Verhältnis (R ) immer bestimmt wird. Denkbar ist es, dass das Verfahren in bestimmten Betriebszuständen des Systems abgeschaltet werden kann.

Weitere Einzelheiten und Vorteile der Erfindung sind anhand der in den Figuren beispielhaft gezeigten Ausführungen erläutert. Dabei zeigen:

Figur 1:  eine schematische Ansicht einer Klappe eines Hochauftriebssystems; und

Figur 2:  eine schematische Ansicht eines erfindungsgemäßen Verfahrensablaufs.

Erfindungsgemäß können alle Lastpfade zwischen einer Klappe des Hochauftriebssystems und einem zentralen Antriebssystem mit Lastsensoren überwacht werden. Im fehlerfreien Zustand (ohne Bruch) stellt sich ein Lastverhältnis zwischen zwei Lastpfaden ein, welches sich in gewissen Grenzen bewegt.

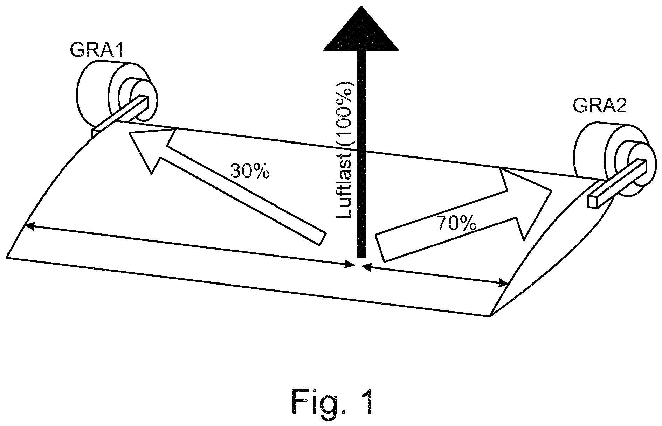

Im Ausführungsbeispiel der Figur 1 ist eine Klappe gezeigt, die über zwei Antriebsstationen GRA1, GRA2 von einem nicht gezeigten zentralen Antriebssystem bewegt werden kann. In der in Figur 1 gezeigten Situation sind die beiden Antriebsstationen GRA1, GRA2 teile zweier unterschiedlicher Lastpfade, über die die auf die Klappe wirkende Luftlast auf die Struktur des Fluggeräts übertragen wird. Im gezeigten Fall wird die Luftlast unsymmetrisch im Verhältnis 30/70 über die beiden Lastpfade an das Fluggerät übertragen.

Im Falle eines Bruchs in einem der Lastpfade ändert sich dieses Lastverhältnis signifikant. Diese Abweichung des Lastverhältnisses (Anteil des Lastpfades an der Gesamtlast) im Fehlerfall von dem Lastverhältnis im fehlerfreien Zustand wird als Indikator für einen Bruch verwendet.

Gemäß einer Lösung 1 werden die beiden Lastwerte L1 und L2 (gemessen über Lastsensoren) der beiden Lastpfade einer Klappe zueinander mit folgender Formel ins Verhältnis R gestellt:

$$R = |L1| / (|L1| + |L2|),$$

wobei jeweils der Betrag des gemessenen Lastwerts verwendet wird, um Singularitäten zu vermeiden. Im fehlerfreien Zustand des Hochauftriebssystems bewegt sich dieses Lastverhältnis R innerhalb der Grenzen Low_THR (unterer Grenzwert) und Up_THR (oberer Grenzwert), wobei die Grenzwerte abhängig von der Klappenposition variieren können.

Bei einem Bruch innerhalb des ersten Lastpfads 1 (z.B. L1 =~0) ändert sich das Verhältnis zu R<Low_THR. Bei Bruch innerhalb des zweiten Lastpfades 2 (z.B. L2=~0) ändert sich das Verhältnis zu R>Up_THR. Dadurch ist eine eindeutige Fehlisolierung auf dem jeweiligen Lastpfad möglich.

Wird ein Bruch durch unter- bzw. überschreiten des jeweiligen Grenzwertes detektiert, wird diese Information ausgegeben.

Um die Robustheit des Verfahrens zu erhöhen, kann das Verhältnis R nur in bestimmten Flugphasen ausgewertet werden:

- nur im Flug,
- nur bei großen Klappenwinkeln,
- nur bei stationären Klappen,
- nur bei Airbrakes eingefahren, und/oder
- nur nach dem Ausfahren der Klappen.

Diese Bedingungen sind keine zwingende Voraussetzung für die Funktion des Monitors und können auch nur teilweise angewandt werden bzw. durch weitere Bedingungen ergänzt werden.

Gemäß einer Lösung 2 kann das Verhältnis R abweichend zu Lösung 1 nach folgender Formel berechnet werden:

$$R = |(|L1| - |L2|)| / (|L1| + |L2|).$$

Durch die Wahl dieses Verhältnisses wird nur ein Grenzwert THR benötigt. Im fehlerfreien Zustand ist R<THR. Bei Bruch eines Lastpfades (L1 =0 oder L2=~0) steigt R signifikant an zu R>THR. Bei Überschreiten des Grenzwerts wird der Bruch per CAS Message angezeigt.

Bei diesem Verfahren ist eine eindeutige Fehlerisolierung auf den fehlerhaften Lastpfad nicht möglich.

In Varianten kann auch ein Vergleich von Lasten unterschiedlicher Klappen durchgeführt werden. Die unter Lösung 1, Lösung 2 und Lösung 3 beschriebenen Verfahren beziehen sich auf den Vergleich der Lasten zweier Lastpfade einer Klappe. Das gleiche Verfahren kann auch auf einen Vergleich der Lasten unterschiedlicher Klappen angewandt werden. Z.B.:

- Symmetrisch gegenüberliegende Lastpfade von linkem und rechtem Flügel,
- Lastpfade unterschiedlicher Klappen an einem Flügel,
- Beliebiger Lastpfad von rechtem Flügel und beliebiger Lastpfad von linkem Flügel

Denkbar ist ferner ein Vergleich von mehr als zwei Lastpfaden. Das unter Lösung 1 und Lösung 2 beschriebene Verhältnis R der Lasten kann auf mehr als zwei Lastinformationen erweitert werden. Dazu werden die Lasten der symmetrisch zueinander angeordneten Klappen von linkem und rechtem Flügel ins Verhältnis gesetzt.

- Beispiel 3 mit Lastwerten: R = |**L1_r**| / (| L1_1| + |**L2_1|**), wobei: r-rechts; l-links
- Beispiel 4 mit Lastwerten: R = (|**L1_r**| + | L2_r|) / (| L1_1| + |**L2_1|**), wobei: r-rechts; 1-links

Dabei kann zur besseren Fehlisolierung ein zweistufiger Grenzwert angewendet werden. Aus den unterschiedlichen Verhältnissen (R) kann auf folgende Vorkommnisse geschlossen werden:

R < Low_THR2 --> Bruch in Lastpfad L1 rechts
Low_THR2 < R < Low_THR 1 → Bruch in Lastpfad L2 rechts
Low_THR1 < R < Up_TRH1 --> Fehlerfreier Zustand
Up_THR1 < R < Up_THR2 --> Bruch in Lastpfad L2 links
Up_THR2 < R --> Bruch in Lastpfad L1 links

Die Bezugszeichen L1 und L2 können sich demnach auf den Lastpfad und auf den in dem entsprechenden Lastpfad erfassten Lastwert beziehen.

Die Detektion eines Bruchs in einem Lastpfad kann redundant durch mehrere Monitore bzw. Überwachungsverfahren/Überwachungsvorrichtungen, die auf unterschiedliche Lastinformationen zugreifen, durchgeführt werden. Die Ergebnisse der Monitore können über AND oder OR Verknüpfung konsolidiert werden.

Vorteile der Erfindung sind darin zu sehen, dass eine Detektion des Bruchs auch ohne Schiefstellung der entsprechenden Klappe erfolgen kann. Ferner kann die Detektion unabhängig vom Absolutwert der Lastmessung erfolgen, wodurch der Einfluss systematischer Sensorfehler reduziert wird. Erfindungsgemäß sind ferner keine dedizierten Sensoren notwendig, da die Lastmessung üblicherweise weitere Funktionen unterstützt. Des Weiteren ist verfahrensgemäß eine eindeutige Fehlerisolierung möglich.

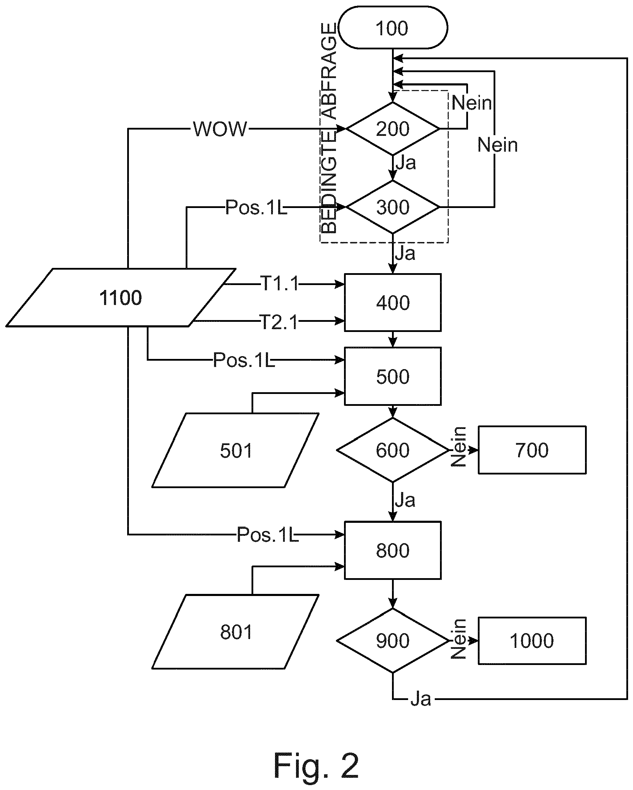

Figur 2 zeigt eine schematische Ansicht eines erfindungsgemäßen Verfahrensablaufs, wie es im Wesentlichen im Anspruch 1 beschrieben ist. Die einzelnen Schritte des in Figur 2 gezeigten Verfahrens können insofern abgewandelt und/oder in abweichender Reihenfolge durchgeführt werden, als dies dem Anspruch 1 nicht widerspricht.

Das Verfahren startet im ersten Schritt 100 und führt zur ersten Abfrage 200, in der der Flugzeugzustand (WOW) abgefragt wird. Falls sich das Fluggerät auf dem Boden befindet, wird die erste Abfrage 200 wiederholt. Falls sich das Fluggerät nicht auf dem Boden befindet wird die zweite Abfrage 300 durchgeführt. In der zweiten Abfrage 300 wird abgefragt, ob sich Klappen des Hochauftriebssystems in bestimmten Positionen befinden. Diese Positionen können beispielsweise ganz oder teilweise ausgefahrenen und/oder verschwenkten Klappen entsprechen.

Falls in der zweiten Abfrage 300 festgestellt wird, dass sich die Klappen in bestimmten Positionen befinden, wird das Lastverhältnis R zweier Lastwerte L1, L2 im Schritt 400 berechnet. Hierzu können die Lastwerte L1, L2 über entsprechende Sensoren eingelesen werden. Falls sich die Klappen nicht in den vorbestimmten Positionen befinden, wird das Verfahren ab der ersten Abfrage 200 wiederholt. Die beiden Abfragen 200, 300 können als bedingte Abfragen durchgeführt werden, die zum Beispiel nur in bestimmten Zuständen des Fluggeräts erfolgen.

Für das berechnete Lastverhältnis R wird für die gegebenen Position Pos1L der Klappe im Schritt 500 ein oberer Grenzwert abgerufen. Dieser Grenzwert kann in einer entsprechenden Tabelle oder in Form eines mathematischen Models 501 hinterlegt sein. Im Schritt 600 wird verglichen, ob das Lastverhältnis R unterhalb dieses oberen Grenzwertes liegt. Falls dies nicht zutrifft, wird eine Information, insbesondere eine CAS-Information mit einem entsprechenden Hinweis auf eine ggf. notwendige Wartung ausgegeben. Die Information wird im Schritt 700 ausgegeben.

Falls das Lastverhältnis R unterhalb des oberen Grenzwertes liegt, wird im Schritt 800 ein unterer Grenzwert für die gegebenen Position Pos1L aus der Tabelle oder aus dem mathematischen Modell 801 eingelesen. Im Schritt 900 wird verglichen, ob das Lastverhältnis R oberhalb des unteren Grenzwertes liegt. Falls dies nicht zutrifft, wird eine Information, insbesondere eine CAS-Information mit einem entsprechenden Hinweis auf eine ggf. notwendige Wartung ausgegeben. Die Information wird im Schritt 1000 ausgegeben. Falls festgestellt wird, dass das Lastverhältnis R oberhalb des unteren Grenzwertes liegt, wird das Verfahren ab dem ersten Schritt der Abfrage 200 wiederholt.

Das Verfahren kann beispielsweise von einem Bordrechner 1100 insbesondere in Echtzeit durchgeführt werden. Die Position der Klappen wird in der Figur 2 mit dem Bezugszeichen Pos1L, die Lastwerte L1, L2 werden mit dem Bezugszeichen T1.1 und T2.1 angegeben.

**Patentansprüche**

1. Verfahren zur Detektion eines Bruchs in einem Hochauftriebssystem eines Fluggeräts, insbesondere eines Flugzeugs, unter Berücksichtigung von Lastwerten im Bereich des Hochauftriebssystems, umfassend die Schritte:

  ▪ Erfassen wenigstens zweier Lastwerte (L1, L2, L1_r, L2_r, L1_l, L2_l) im Bereich des Hochauftriebssystems, wobei die wenigstens zwei Lastwerte einen ersten Lastwert (L1), einen zweiten Lastwert (L2), einen ersten Lastwert eines rechten Flügels (L1_r), einen zweiten Lastwert am rechten Flügel (L2_r), einen ersten Lastwert eines linken Flügels (L1_l) und / oder einen zweiten Lastwert am linken Flügel (L2_l) umfassen;
- Berechnen wenigstens eines Verhältnisses (R) der wenigstens zwei Lastwerte (L1, L2, L1_r, L2_r, L1_l, L2_l);
- Vergleichen des Verhältnisses (R) mit wenigstens einem Grenzwert (THR, Low_THR, Up_THR); und
- Ausgeben eines Signals in Abhängigkeit von dem Vergleich,

**dadurch gekennzeichnet, dass**
das wenigstens eine Verhältnis (R) gemäß einer der Gleichungen

$$R = |L1| / (|L1|+|L2|) \qquad (1),$$

$$R = (|L1|-|L2|) / (|L1|+|L2|) \qquad (2),$$

$$R = |L1\_r| / (|L1\_l|+|L2\_l|) \qquad (3)$$

oder

$$R = (|L1\_r| + |L2\_r|) / (|L1\_l|+|L2\_l|) \qquad (4)$$

berechnet wird.

2. Verfahren nach Anspruch 1, **dadurch gekennzeichnet, dass** die Lastwerte (L1, L2) an einer einzigen Klappe des Hochauftriebssystems gemessen werden.

3. Verfahren nach Anspruch 1, **dadurch gekennzeichnet, dass** die Lastwerte (L1, L2) an wenigstens zwei unterschiedlichen Klappen des Hochauftriebssystems gemessen werden.

4. Verfahren nach Anspruch 3, **dadurch gekennzeichnet, dass** die wenigstens zwei unterschiedlichen Klappen einander symmetrisch gegenüberliegende Klappen und/oder beliebige Klappen eines linken und eines rechten Flügels des Fluggeräts sind.

5. Verfahren nach Anspruch 3, **dadurch gekennzeichnet, dass** die wenigstens zwei unterschiedlichen Klappen Klappen eines einzelnen Flügels des Fluggeräts sind.

**Claims**

1. Method for detecting a fracture in a high-lift system of an aircraft, particularly an aeroplane, taking into consideration load values in the vicinity of the high-lift system, comprising the steps of:

   • detecting at least two load values (L1, L2, L1_r, L2_r, L1_l, L2_l) in the vicinity of the high-lift system, wherein the at least two load values comprise a first load value (L1), a second load value (L2), a first load value of a right wing (L1_r), a second load value on the right wing (L2_r), a first load value of a left wing (L1_l) and/or a second load value on the left wing (L2_l);
   • calculating at least one ratio (R) of the at least two load values (L1, L2, L1_r, L2_r, L1_l, L2_l);
   • comparing the ratio (R) with at least one limit value (THR, Low_THR, Up_THR); and
   • outputting a signal on the basis of the comparison,

   **characterised in that**
   the at least one ratio (R) is calculated in accordance with one of the following equations:

$$R = |L1| / (|L1|+|L2|) \qquad (1),$$

$$R = (|L1|-|L2|) / (|L1|+|L2|) \qquad (2),$$

$$R = |L1\_r| / (|L1\_l|+|L2\_l|) \qquad (3)$$

or

$$R = (|L1\_r| + |L2\_r|) / (|L1\_l|+|L2\_l|) \qquad (4).$$

2. Method according to claim 1, **characterised in that** the load values (L1, L2) are measured on a single flap of the high-lift system.

3. Method according to claim 1, **characterised in that** the load values (L1, L2) are measured on at least two different flaps of the high-lift system.

4. Method according to claim 3, **characterised in that** the at least two different flaps are symmetrically opposite flaps and/or any flaps of a left and a right wing of the aircraft.

5. Method according to claim 3, **characterised in that** the at least two different flaps are flaps of a single wing of the aircraft.


**Revendications**

1. Procédé de détection d'une rupture dans un système hypersustentateur d'un aéronef, en particulier d'un avion, en tenant compte de valeurs de charge dans la zone du système hypersustentateur, comprenant les étapes :

   • de détection d'au moins deux valeurs de charge (L1, L2, L1_r, L2_r, L1_l, L2_l) dans la zone du système hypersustentateur, dans lequel les au moins deux valeurs de charge comprennent une première valeur de charge (L1), une deuxième valeur de charge (L2), une première valeur de charge d'une aile droite (L1_r), une deuxième valeur de charge sur l'aile droite (L2_r), une première valeur de charge d'une aile gauche (L1_l) et/ou une deuxième valeur de charge sur l'aile gauche (L2_l) ;
   • de calcul d'au moins un rapport (R) des au moins deux valeurs de charge (L1, L2, L1_r, L2_r, L1_l, L2_l) ;
   • de comparaison du rapport (R) à au moins une valeur limite (THR, Low_THR, Up_THR) ; et
   • de délivrance en sortie d'un signal en fonction de la comparaison,

   **caractérisé en ce que**
   l'au moins un rapport (R) est calculé selon une des équations :

$$R = |L1| / (|L1|+|L2|) \qquad (1),$$

$$R = (|L1|-[L2|) / (|L1|+|L2|) \qquad (2),$$

$$R = |L1\_r| / (|L1\_l|+|L2\_l|) \qquad (3)$$

ou

$$R = (|L1\_r| + |L2\_r|) / (|L1\_l|+|L2\_l|) \qquad (4).$$

2. Procédé selon la revendication 1, **caractérisé en ce que** les valeurs de charge (L1, L2) sont mesurées sur une unique trappe du système hypersustentateur.

**3.** Procédé selon la revendication 1, **caractérisé en ce que** les valeurs de charge (L1, L2) sont mesurées sur au moins deux trappes différentes du système hypersustentateur.

**4.** Procédé selon la revendication 3, **caractérisé en ce que** les au moins deux trappes différentes sont des trappes se faisant face de manière symétrique et/ou des trappes quelconques d'une aile gauche et d'une aile droite de l'aéronef.

**5.** Procédé selon la revendication 3, **caractérisé en ce que** les au moins deux différentes trappes sont des trappes d'une unique aile de l'aéronef.

Fig. 1

Fig. 2

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010288886 A1